# EUROPÄISCHE PATENTANMELDUNG

(11) **EP 1 348 957 A1**
(43) Veröffentlichungstag der Anmeldung: **01.10.2003**
(21) Anmeldenummer: 02405241.7
(22) Anmeldetag: 27.03.2002
(51) Int. Cl.: G01N 30/56

(54) **Vorrichtung und Verfahren zum Befüllen einer Säule mit einem Füllmaterial**

(71) Anmelder: Büchi Labortechnik AG, CH-9230 Flawil (CH)
(72) Erfinder: Talamona, Angelo, 9230 Flawil (CH)
(74) Vertreter: Müller, Christoph Emanuel

(57) **Zusammenfassung**

Eine Vorrichtung (1) und ein Verfahren dienen zum Befüllen einer Säule (20) mit einem Füllmaterial (T). Die Säule (20) ist an zwei Enden (21a, 21b) mit einer Befüllöffnung (22b) bzw. mit einer Ansaugöffnung (22a) versehen. Die Säule ist durch eine Haltevorrichtung (12) gehalten. Mit der Haltevorrichtung (12) kann die Säule (20) in einem Behälter (11) eingesetzt werden, in dem sich das Füllmaterial (T) befindet. Die Säule (20) ist über eine Verbindungsleitung (13) mit einer Unterdruckquelle (14) verbunden. Durch Erzeugen eines Unterdrucks (P) im Innern (24) der Säule (20) lässt sich das Füllmaterial (T) homogen in das Innere (24) der Säule (20) ansaugen.

## Beschreibung

Die Erfindung betrifft ein Verfahren und eine Vorrichtung zum Befüllen einer Säule mit einem Füllmaterial mit den Merkmalen des Oberbegriffs der unabhängigen Patentansprüche.

Bei der Chromatographie werden sogenannte Trennsäulen verwendet. Die Trennsäulen sind mit einem Trennmaterial versehen, welche in einer Probe enthaltene Stoffe selektiv zurückhalten sollen. Das Trennmaterial von Trennsäulen, die beispielsweise bei präparativer Chromatographie verwendet werden, sind typischerweise Kieselgele oder modifizierte Kieselgele

Das verwendete Kieselgel hat typischerweise eine Grösse von einigen 10µm. Um qualitativ ausreichende Analyseresultate zu erhalten, ist es notwendig, dass das Trennmedium, beispielsweise das Kieselgel homogen über die ganze Länge und über den ganzen Querschnitt der Trennsäule verteilt ist. Solche Trennsäulen werden heute komplett mit Trennmedium gepackt an den Benutzer geliefert, der sie in einer Chromatographie-Vorrichtung einsetzt. Bei dieser Vorgehensweise besteht aber der Nachteil, dass auf Grund von Vibrationen beim Transport eine inhomogene Verteilung des Trennmediums in der Trennsäule entstehen kann. Kieselgel weist Partikel mit verschiedenen Grössen auf, die einer bestimmten Grössenverteilung entsprechen. Vibrationen können zu einer Entmischung von Partikeln mit unterschiedlichen Korngrössen führen, so dass sich beispielsweise grössere Partikel durch die Vibrationen nach unten absetzen. Das Problem der Entmischung beim Transport kann dadurch gelöst werden, dass eine Säule in der Form eines Röhrchens direkt durch den Benutzer mit dem Trennmedium befüllt wird. Aus JP 08-094603 ist beispielsweise eine Methode bekannt, mit welcher Trennsäulen für die Flüssigchromatographie gepackt werden können. Die Befüllung der Säule erfolgt dadurch, dass am einen Ende der Säule ein Vakuum erzeugt wird. Durch Öffnen eines Ventils wird das pulverförmige Trennmedium in die Kolonne eingesaugt. Gleichzeitig zum Ansaugen erfolgt ein Klopfen. Ein Nachteil bei dieser Anordnung besteht darin, dass sich auf Grund der Zufuhr durch eine Rohrleitung bereits beim Befüllen der Trennsäule mit dem Trennmaterial Inhomogenitäten ergeben können. Ausserdem ist das darin vorgeschlagene Verfahren verhältnismässig aufwendig, da die Trennsäule auf beiden Seiten mit Anschlüssen zum Befüllen bzw. zum Evakuieren versehen werden muss. Eine rationelle Befüllung ist deshalb nicht möglich.

Es ist deshalb eine Aufgabe der vorliegenden Erfindung, die Nachteile des Bekannten zu vermeiden, insbesondere also eine Vorrichtung und ein Verfahren zum Befüllen bzw. Wiederbefüllen von Säulen zu schaffen, bei welchen eine homogene Befüllung der Trennsäule auf einfache und rationelle Weise möglich ist.

Erfindungsgemäss werden diese Aufgaben mit einer Vorrichtung und mit einem Verfahren mit den Merkmalen des kennzeichnenden Teils der unabhängigen Patentansprüche gelöst.

Die Vorrichtung dient zum Befüllen einer Säule, die an zwei Enden eine Öffnung aufweist. Hier und im Folgenden wird mit dem Begriff Säule ein Behältnis mit einer langgestreckten Form verstanden, das eine beliebige Querschnittform aufweisen kann. Die Säule soll mit einem Füllmaterial befüllt werden. Insbesondere soll die Säule als Trennsäule für die Chromatographie dienen und mit einem Trennmedium befüllt werden. Die Vorrichtung weist einen Behälter zur Aufnahme des Füllmaterials auf. Die Vorrichtung ist ausserdem mit einer Haltevorrichtung versehen. Die Haltevorrichtung dient zum Halten der Säule. Ausserdem weist die Vorrichtung eine Verbindungsleitung auf, welche eine luftdichte Verbindung einer Ansaugöffnung an einem Ende der Säule mit einer Unterdruckquelle erlaubt. Erfindugnsgemäss ist die Säule mittels der Haltevorrichtung wenigstens mit einer Befüllöffnung am anderen Ende der Säule in den Behälter einsetzbar. Zum Einsaugen des Füllmaterials aus dem Behälter in die Säule ist mit der Unterdruckquelle ein Unterdruck erzeugbar.

Die erfindungsgemässe Vorrichtung weist verschiedene Vorteile auf. In vielen Labors sind bereits Unterdruckquellen vorhanden. Laborpersonal kennt sich mit der Bedienung von solchen Geräten aus. Die Unterdruckquelle wird nun auf einfache Weise verwendet, um eine Trennsäule zu befüllen. Das Trennmaterial kann auf einfache Weise in dem Behälter gehalten werden. Da sich der Behälter nicht bewegt, besteht keine oder nur eine geringe Gefahr der Entmischung. Weil die Säule mittels der Haltevorrichtung in den Behälter einsetzbar ist, lässt sich die Säule sehr rasch befüllen. Ein Anschluss einer Zufuhrleitung für das Füllmedium an der Befüllöffnung der Säule ist dazu nicht erforderlich. Ausserdem führt das Eintauchen der Säule in das im Behälter enthaltene Füllmaterial dazu, dass die Säule sehr rasch und linear befüllt werden kann. Auch damit ist sichergestellt, dass sich keine Entmischungen bzw. Inhomogenitäten während der Befüllung ergeben.

Gemäss einem ersten bevorzugten Ausführungsbeispiel ist der Behälter mit Mitteln zum Fluidisieren des Füllmaterials versehen. Durch die Fluidisierung des aus sehr kleinen Partikeln bestehenden Füllmaterials wird sichergestellt, dass im Behälter selbst das Füllmaterial homogen verteilt bleibt. Beispielsweise können die Mittel zum Fluidisieren durch eine Druckluftquelle gebildet sein, mittels welcher Luft in den Behälter, beispielsweise von unten her, einblasbar ist. Auch Druckluft ist in Labors meist vorhanden. Die Fluidisierung kann also ohne grösseren Aufwand erfolgen.

Gemäss einer bevorzugten Ausführungsform weist die erfindungsgemässe Vorrichtung eine Befüllstation, eine Verschliessstation und vorzugsweise eine Reinigungsstation auf. Die Säule ist zwischen den Stationen bewegbar. Besonders bevorzugt erfolgt eine Bewegung durch Verschwenken der Säule entlang einer Kreisbahn, auf welcher sich die Stationen befinden.

Gemäss einer weiteren bevorzugten Ausführungsform weist die Reinigungsstation Mittel auf, die zum Entfernen von überschüssigem Füllmaterial im Bereich der Befüllöffnung dienen. Die Mittel zum Entfernen des überschüssigen Füllmaterials können beispielsweise ein drehbares Rakel aufweisen. Das Rakel kann eine Breite aufweisen, die etwa dem freien Innendurchmesser einer zylindrisch ausgebildeten Säule entspricht. Die Höhe des Rakels entspricht etwa der Länge des Abschnitts am Ende der Säule, welcher nicht befüllt werden soll. Ein nicht befüllter Abschnitt am Ende der Säule ist beispielsweise gewünscht, damit die Säule verschlossen werden kann.

Die Verschliessstation weist typischerweise Mittel zum Einsetzen eines Verschlusskörpers in die Befüllöffnung der Säule auf. Der Verschlusskörper kann beispielsweise aus einer Fritte aus porösem Material z.B. aus Polyethylen, PTFE oder Glas bestehen.

Gemäss einer weiteren bevorzugten Ausführungsform ist die Haltevorrichtung höhenverstellbar ausgeführt. Dadurch kann die Säule durch Absenken der Haltevorrichtung in das Füllmaterial im Behälter eingetaucht werden. Gleichzeitig kann die befüllte Säule durch Absenken auf die Mittel zum Entfernen des überschüssigen Materials, beispielsweise auf das drehbare Rakel in der oben beschriebenen Form gereinigt werden. Schliesslich erlaubt die höhenverstellbare Anordnung der Säule auch ein einfaches Einsetzen eines Verschlusskörpers, beispielsweise einer Fritte durch Absenken der Säule auf ein Lager, das einen solchen Verschlusskörper trägt. Typischerweise ist die Unterdruckquelle zur Erzeugung eines Unterdrucks im Bereich von 10 mbar bis 1 mbar jedenfalls kleiner als 400 mbar ausgelegt. Es hat sich gezeigt, dass mit einem derartigen Unterdruck das Füllmaterial ausreichend rasch in die Säule eingesaugt werden kann und dass sich auf Grund des erzeugten Unterdrucks das Füllmaterial auch gegen die Gravitation in der Trennsäule hält. Dies ist insbesondere dann von Vorteil, wenn die Säule durch Absenken in vertikaler Richtung in die Befüll-, bzw. Reinigungs- oder Verschliessstation bewegt wird.

Vorteilhaft kann die Verbindungsleitung zum Verbinden der Unterdruckquelle mit der Säule eine Ventilanordnung aufweisen. Mit der Ventilanordnung lässt sich die Verbindungsleitung schliessen. Dadurch ist es auf einfache Weise möglich, die Unterdruckquelle zuerst in Betrieb zu nehmen, die Säule danach in den Behälter einzusetzen und erst wenn die Säule in der gewünschten Lage ist, den Unterdruck in der Säule zu erzeugen.

Die Haltevorrichtung kann ausserdem mit einem Anschlag versehen sein, der die Eintauchtiefe der Säule in den Behälter genau definiert.

Gemäss dem erfindungsgemässen Verfahren wird eine an zwei Enden offene Säule mit einem Füllmaterial befüllt. Die Säule dient insbesondere als Trennsäule für die Chromatographie. Deshalb wird typischerweise die Säule mit einem Trennmedium befüllt. In einem ersten Schritt wird die Säule in einen Behälter eingesetzt, in dem sich das Füllmaterial befindet. In einem nächsten Schritt wird im Innern der Säule ein Unterdruck erzeugt. Der Unterdruck dient dazu, dass Füllmaterial durch eine Befüllöffnung an einem Ende der Säule in die Säule einzusaugen. Sobald die Säule mit Füllmaterial gefüllt ist, wird sie aus dem Behälter entfernt.

Gemäss einem bevorzugten Ausführungsbeispiel wird die Säule mit der Befüllöffnung an ihrem unteren Ende in den Behälter abgesenkt.

Nach dem Befüllen und dem Entfernen der Säule aus dem Behälter kann die Befüllöffnung verschlossen werden. Dies kann insbesondere durch Einsetzen einer Fritte aus porösem Material geschehen. Der Vorteil eines derartigen Verschlusses liegt darin, dass die Fritte den Trennvorgang während der Chromatographie nicht nachteilig beeinflusst. Vor dem Verschliessen der Säule kann die Säule wenigstens im Bereich der Befüllöffnung auf ihrer Innenseite gereinigt werden, so dass sich die Fritte einfach einsetzen lässt.

Es ist ausserdem denkbar und bevorzugt, vor dem Befüllen der Säule bzw. vor dem Verbinden der Säule mit der Unterdruckquelle an einer Ansaugöffnung der Säule ebenfalls ein luftdurchlässiges Verschlusselement, insbesondere eine Fritte aus porösem Material anzubringen. Damit werden verschiedene Vorteile erzielt. Einerseits ist die Säule dadurch auch an ihrer Ansaugöffnung verschlossen. Wenn das Verschlusselement vor dem Befüllen angebracht wird, wirkt das luftdurchlässige Verschlusselement gewissermassen als Rückhalteelement, das verhindert, dass das Füllmaterial durch die Verbindungsleitung in Richtung der Unterdruckquelle gesaugt wird.

Bevorzugt wird vor oder auch während dem Befüllen der Säule das Füllmaterial im Behälter fluidisiert. Es ist denkbar, das Füllmaterial durch Schütteln oder Rühren zu fluidisieren. Insbesondere bevorzugt ist aber eine Fluidisierung durch Einblasen von Luft oder anderer, z.B. inerter Gase in den Behälter.

Erfindungsgemäss ist die Säule mittels der Haltevorrichtung in den Behälter einsetzbar. Dabei ist es sowohl denkbar, die Säule mit der Haltevorrichtung abzusenken oder alternativ den Behälter anzuheben. Es sind auch andere Bewegungen denkbar. Beispielsweise kann die Säule durch Verschwenken aus einer Horizontallage in eine Vertikallage in das sich im Behälter befindliche Füllmaterial eingetaucht werden.

Alternativ zu einer Bewegung zwischen den einzelnen Stationen entlang einer Kreisbahn ist es auch denkbar, die Säule linear zu bewegen oder gegebenenfalls sogar, die Säule ortsfest anzuordnen und die Reinigungsstation, Verschlussstation und Befüllstation zu bewegen, beispielsweise zu verschieben. Es sind auch verschiedene mechanische Lösungen zum Reinigen bzw. zum Verschliessen der Befüllöffnung der Säule denkbar, ohne dass dadurch der Rahmen der Erfindung verlassen würde. Die Reinigung kann beispielsweise auch durch Abwischen mit einem Pinsel erfolgen.

Die Erfindung wird im Folgenden in Ausführungsbeispielen und an Hand der Zeichnungen näher erläutert. Es zeigen:
- Figur 1:: Eine schematische Darstellung einer erfindungsgemäss befüllten Trennsäule,
- Figur 2:: eine schematische Darstellung einer erfindungsgemässen Vorrichtung in perspektivischer Form,
- Figur 3:: eine schematische Darstellung des Befüllvorgangs gemäss der Erfindung,
- Figuren 4a, 4b:: eine schematische Darstellung des Reinigungsvorgangs bzw. einer Reinigungsstation gemäss der Erfindung,
- Figur 5:: eine schematische Darstellung einer Verschlussstation gemäss der Erfindung,
- Figur 6:: eine schematische Darstellung einer Verbindung zwischen einer Säule und einer Unterdruckquelle gemäss der Erfindung und
- Figur 7:: eine vergrösserte Darstellung eines Kupplungsstückes.

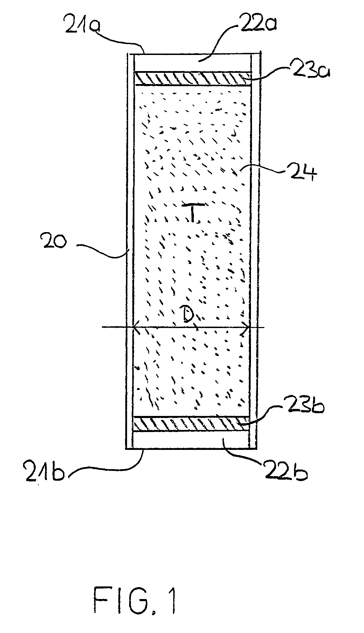

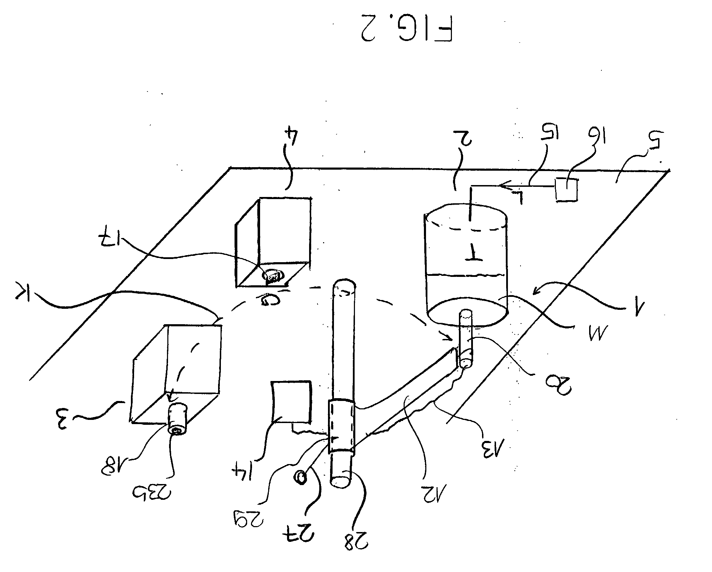

Figur 1 zeigt eine Trennsäule 20, welche mit einem Trennmedium T befüllt ist. Die Trennsäule 20 besteht aus einem Kunststoffmaterial, beispielsweise aus einem präzise gefertigten Röhrchen aus Polyethylen oder auch aus Glas. Das Röhrchen weist typischerweise eine Wandstärke von 1-2 mm (und einen beliebigen Innendurchmesser D auf). Die Trennsäule 20 weist einen Innenraum 24 auf, der homogen mit dem Trennmaterial T befüllt ist. Die Trennsäule 20 ist an einem oberen Ende 21a mit einer ersten Öffnung 22a und an einem unteren Ende 21b mit einer zweiten Öffnung 22b versehen. Die Öffnung 22a am oberen Ende 21a ist mit einer Fritte 23a verschlossen. Die Fritte 23a besteht z.B. aus Polyethylen und weist eine scheibenförmige Form auf, deren Durchmesser etwa dem freien Innendurchmesser D des Rohrs der Trennsäule 20 entspricht, so dass die Fritte kraftschlüssig im Röhrchen gehalten wird. Die Öffnung 22b am unteren Ende 21b der Trennsäule 20 ist mit einer Fritte 23b verschlossen. Die Trennsäule 20 weist an ihren Enden 21a, 21b geeignet ausgebildete Verbindungsmittel (nicht dargestellt) auf, die ein Einsetzen der Säule in herkömmliche Chromatographie Vorrichtungen erlauben. Diese nicht näher dargestellten Verbindungsmittel können auch zum Verbinden der Trennsäule 20 mit einer Verbindungsleitung 13 (siehe Figur 2) dienen. Als Trennmaterial T wird typischerweise Kieselgel mit einer mittleren Korngrösse von 40 bis 65µm eingesetzt. Solche Trennmaterialien werden beispielsweise zur präparativen Flüssigchromatographie verwendet.

Figur 2 zeigt schematisch die erfindungsgemässe Vorrichtung 1, welche zum Befüllen von Trennsäulen 20 gemäss Figur 1 dient. Die Vorrichtung 1 besteht im Wesentlichen aus einer Grundplatte 5, auf welcher eine Befüllstation 2, eine Verschliessstation 3 und eine Reinigungsstation 4 angeordnet sind.

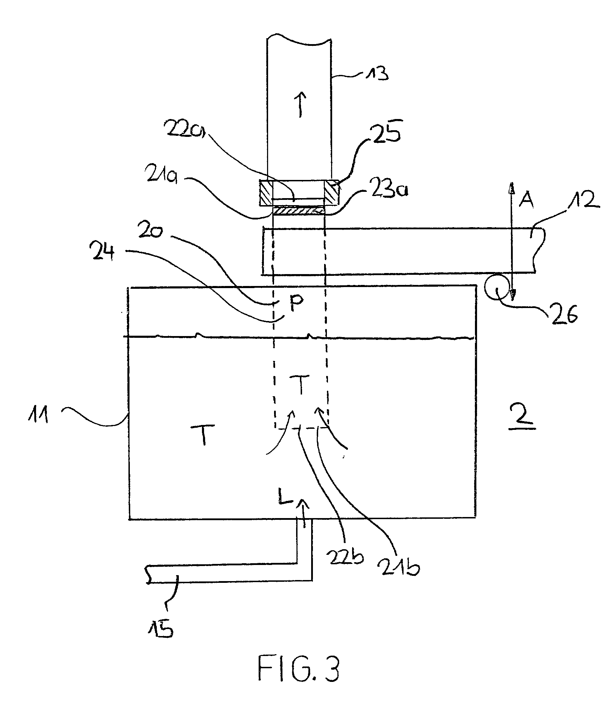

Die Befüllstation 2 besteht im Wesentlichen aus einem Behälter 11. Der Behälter ist zur Aufnahme einer Menge von Füllmaterial ausgelegt, die für die Befüllung mehrerer Säulen dient. Die Säule 20 ist mittels einer Haltevorrichtung 12 gehalten. Die Haltevorrichtung 12 ist in axialer Richtung entlang einer Stativstange verschiebbar und verschwenkbar gehalten. Ein Arm der Haltevorrichtung 12 ist an einer Manschette 29 befestigt, die entlang der Stativstange 28 gleitet. Ein Hebel 27 dient zum Feststellen der Haltevorrichtung 12 in axialer und in Verschwenkrichtung. Der Behälter 11 ist mit einer Druckluftleitung 15 versehen, durch welche mittels eines Kompressors 16 Druckluft L in den Behälter 11 einblasbar ist. Dadurch lässt sich das im Behälter enthaltene Trennmedium T fluidisieren. Die Vorrichtung weist ausserdem eine Verbindungsleitung 13 auf, mittels welcher sich die Säule 20 mit einer Unterdruckquelle 14 verbinden lässt. Zum Befüllen der Säule 20 mit Trennmedium T wird die Säule durch Absenken der Haltevorrichtung 12 in den Behälter 11 eingetaucht (siehe auch Figur 3). Sobald die Säule 20 ausreichend tief im Behälter 11 eingetaucht ist, wird mit der Unterdruckquelle 14 im Innern der Säule 20 ein Vakuum erzeugt. Dadurch wird das Trennmedium T rasch und homogen in das Innere 24 der Säule 20 angesaugt. Sobald die Trennsäule 20 befüllt ist, wird sie durch Anheben der Haltevorrichtung 12 aus dem Behälter 11 entfernt.

In einem nächsten Schritt wird die Trennsäule 20 durch Verschwenken der Haltevorrichtung 12 entlang einer Kreisbahn K zu der Reinigungsstation 4 verschwenkt. Die Reinigungsstation 4 weist ein drehbares Rakel 17 auf, mittels welchem sich überschüssiges Trennmaterial T am unteren Ende 21b der Trennsäule wegkratzen lässt.

Sobald das überschüssige Trennmaterial entfernt worden ist, wird die Trennsäule 20 wieder durch Verschwenken entlang der Kreisbahn K zu der Verschliessstation 3 gebracht. Die Verschliessstation 3 weist ein Lager 18 auf, auf welcher eine Fritte 23b zum Verschliessen des unteren Endes 21b der Säule 20 gelagert ist.

Vor dem Befüllen der Säule 20 wird die Säule bzw. die Vorrichtung wie folgt vorbereitet: Am oberen Ende 21a wird in die Ansaugöffnung 22a eine Fritte 23a eingesetzt. Anschliessend wird das obere Ende 21a bzw. die Ansaugöffnung 22a der Säule 20 mit einem Kupplungsstück 25 (siehe Figur 3) mit der Verbindungsleitung 13 und dadurch mit der Unterdruckqulle 14 verbunden.

In Figur 3 ist in vergrösserter Darstellung die Säule 20 in der Befüllstation 2 gezeigt. Die Säule 20 ist an ihrem oberen Ende 21a mit einem Kupplungsstück 25 mit der Verbindungsleitung 13 verbunden. Im Bereich des oberen Endes 21a ist in der Ansaugöffnung 22a eine erste Fritte 23a eingesetzt. Durch die Verbindungsleitung 13 lässt sich mittels der Unterdruckquelle 14 im Inneren 24 der Säule 20 ein Unterdruck P erzeugen. Dadurch wird Trennmedium T durch die Befüllöffnung 22b am unteren Ende 21b der Säule 20 in das Innere 24 der Säule 20 angesaugt. Das Innere 24 der Säule wird dadurch bis zu der Fritte 23a homogen mit Trennmedium T befüllt.

Das Trennmedium T wird durch Einblasen von Luft L durch eine Druckleitung 15 in den Behälter 11 fluidisiert.

Die Trennsäule 20 ist an der Haltevorrichtung 12 befestigt. Die Befestigung ist nicht im Detail gezeigt. Die Befestigung kann auf dem Fachmann bekannte Weise beispielsweise durch eine Klemme erfolgen.

Die Haltevorrichtung ist in axialer Richtung A höhenverstellbar. Ein Anschlag 26 begrenzt die Axialbewegung nach unten und definiert so die maximale Eintauchtiefe der Säule 20 im Behälter 11.

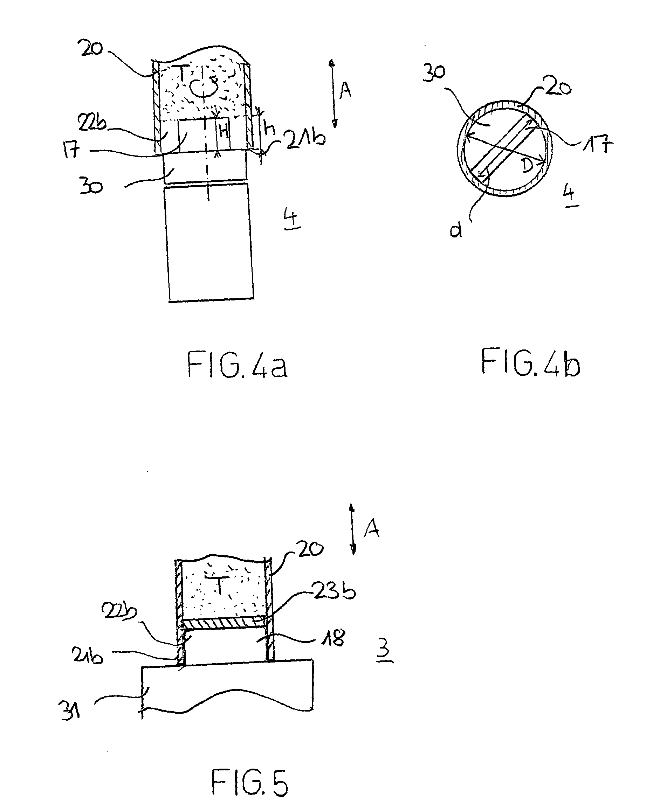

Figuren 4a und 4b zeigen eine schematische Darstellung der Reinigungsstation 4 in Seitenansicht (Figur 4a) und in der Draufsicht (Figur 4b).

Die Reinigungsstation weist eine Halterung 30 auf, auf der ein drehbares Rakel 17 angeordnet ist. Das Rakel 17 entspricht im Wesentlichen einer Klinge, deren radial äussere Seiten entlang der freien Innenfläche der Trennsäule streichen. Zum Entfernen von überschüssigem Trennmaterial T im Bereich der Befüllöffnung 22b am unteren Ende 21b der Trennsäule 20 wird die Säule in Achsrichtung A mit der Haltevorrichtung 12 abgesenkt, bis das untere Ende 21b etwa auf der Halterung 30 aufliegt. Dabei dringt das Rakel 17 in die Öffnung 22b am unteren Ende 21b der Säule 20. Die Höhe H des Rakels entspricht dabei etwa der Länge h des Abschnittes, in dem das Trennmaterial T entfernt werden soll. In Figur 4b ist eine Draufsicht auf das Rakel 17 gezeigt. Der Aussendurchmesser d des Rakels 17 entspricht im Wesentlichen dem freien Innendurchmesser D der Säule 20. Durch Drehen des Rakels 17 wird überschüssiges Material am unteren Ende 21b entfernt. Gleichzeitig wird eine genau gerade horizontale Abschlussfläche des Trennmaterials T erzeugt.

Sobald das überschüssige Trennmaterial T entfernt worden ist, wird die Trennsäule 20 wieder in Achsrichtung A abgehoben. Weil die Trennsäule 20 immer noch mit der Unterdruckquelle 14 verbunden ist, wird das Trennmaterial T auch gegen die Gravitationskraft in der Trennsäule 20 gehalten.

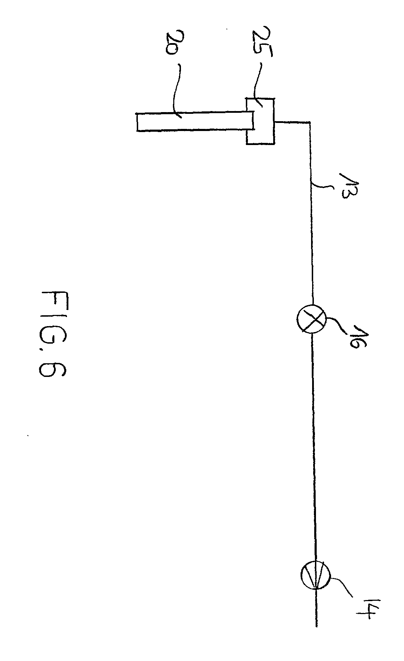

Figur 5 zeigt schematisch die Verschliessstation 3. Die Verschliessstation 3 weist ein Lager 18 auf. Auf dem Lager 18 ist eine zweite Fritte 23b abgelegt. Durch Senken der Trennsäule 20 auf die Verschliessstation 3 kann die Fritte 23b in die Öffnung 22b am unteren Ende 21b der Säule 20 eingesetzt werden. Die Säule 20 wird soweit abgesenkt, bis ihr unteres Ende 21b auf einer Halterung 31 für das Lager 18 aufliegt. Die Dimension der Fritte 23b ist so gewählt, dass sie auf Grund von Gleitreibung fest im Innern der Säule 20 verbleibt. Durch Anheben der Säule 20 in Achsrichtung A wird die Säule von der Verschliessstation 3 entfernt. Die Säule 20 ist homogen mit dem Trennmedium T befüllt und beidseitig mit einer Fritte 23a, 23b abgeschlossen. Zum Abschluss des Befüllvorgangs wird die Verbindungsleitung 13 mit einer Ventilanordnung 19 (siehe Figur 6) unterbrochen, so dass sich durch die Befüllöffnung 22b im Innern 24 der Säule 20 wieder Normaldruck einstellen kann. Sobald sich Normaldruck eingestellt hat, beispielsweise nach Warten von einigen Sekunden, kann das Kupplungsstück 25 vom oberen Ende 21a der Säule 20 entfernt und die Säule aus der Haltevorrichtung 12 entnommen werden.

Figur 6 zeigt schematisch die Verbindung zwischen der Säule 20 und der Unterdruckquelle 14 mittels dem Kupplungsstück 25, der Verbindungsleitung 13 und einem in die Verbindungsleitung 13 eingesetzten Ventil 16.

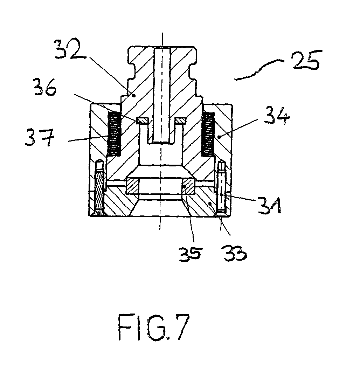

Figur 7 zeigt eine vergrösserte Darstellung eines Kupplungsstükkes 25 zum Einsatz in der vorliegenden Erfindung. Das Kupplungsstück besteht im Wesentlichen aus einer Klemmhülse 32 zur Verbindung mit der Verbindungsleitung 13. In der Klemmhülse 32 ist eine Flachdichtung 36 eingesetzt, gegen welche das obere Ende 21a der Säule 20 pressbar ist. Ein Spannring 35 ist zwischen der Klemmhülse 32 und einem Deckel 33 eingeklemmt. Der Deckel 33 ist über Schrauben 31 mit einer Griffhülse 34 verbunden, welche mittels einer Druckfeder 37 an der Klemmhülse 32 vorgespannt ist. Die Säule 20 liegt, wenn sie im Kupplungsstück 25 eingesetzt ist, dicht an der Flachdichtung 36 an und wird durch den Spannring 35 gehalten.

## Patentansprüche

1. Vorrichtung (1) zum Befüllen einer an zwei Enden (21a, 21b) offenen Säule (20) mit einem Füllmaterial (T), insbesondere zum Befüllen einer Trennsäule (20) für die Chromatographie mit einem Trennmedium (T),
mit einem Behälter (11) zur Aufnahme von Füllmaterial (T), mit einer Haltevorrichtung (12) zum Halten der Säule (20) und
mit einer Verbindungsleitung (13) zum luftdichten Verbinden einer Ansaugöffnung (22a) an einem Ende (21a) der Säule (20) mit einer Unterdruckquelle (14),
wobei die Säule (20) mittels der Haltevorrichtung (12) wenigstens mit einer Befüllöffnung (22b) am anderen Ende (21b) der Säule (20) in den Behälter (11) einsetzbar ist und
wobei in der Säule (20) zum Einsaugen des Füllmaterials (T) aus dem Behälter (11) in die Säule (20) mit der Unterdruckquelle (14) ein Unterdruck (P) erzeugbar ist.

2. Vorrichtung nach Anspruch 1, **dadurch gekennzeichnet, dass** der Behälter (11) Mittel (15) zum Fluidisieren des Füllmaterials (T) aufweist.

3. Vorrichtung nach Anspruch 2, **dadurch gekennzeichnet, dass** die Mittel zum Fluidisieren durch eine Druckluftquelle (15, 16) gebildet sind, mittels welcher ein Gas, insbesondere Luft (L) in den Behälter (11) einblasbar ist.

4. Vorrichtung nach einem der Ansprüche 1 bis 3, **dadurch gekennzeichnet, dass** die Säule (20) mittels der Haltevorrichtung (12) zwischen einer Befüllstation (2), einer Verschliessstation (3) und vorzugsweise einer Reinigungsstation (4) bewegbar, insbesondere verschwenkbar ist.

5. Vorrichtung nach Anspruch 4, **dadurch gekennzeichnet, dass** die Säule (20) entlang einer Kreisbahn (K) zwischen der Befüllstation (2), der Reinigungsstation (4) und der Verschliessstation (3) verschwenkbar ist.

6. Vorrichtung nach einem der Ansprüche 4 oder 5, **dadurch gekennzeichnet, dass** die Reinigungsstation (4) Mittel (17) zum Entfernen von überschüssigem Füllmaterial (T) im Bereich der Befüllöffnung (22b) aufweist.

7. Vorrichtung nach Anspruch 6, **dadurch gekennzeichnet, dass** die Mittel zum Entfernen ein drehbares Rakel (17) aufweisen.

8. Vorrichtung nach einem der Ansprüche 4 bis 7, **dadurch gekennzeichnet, dass** die Verschliessstation (3) Mittel (18) zum Einsetzen eines Verschlusskörpers (23b), insbesondere einer Fritte in die Befüllöffnung (22b) am Ende 21b der Säule (20) aufweist.

9. Vorrichtung nach einem der Ansprüche 1 bis 8, **dadurch gekennzeichnet, dass** die Haltevorrichtung (12) höhenverstellbar ausgebildet ist, so dass die Säule (20) durch Senken der Haltevorrichtung (12) entlang einer Achse (A) in das Füllmaterial (T) im Behälter (11) eintauchbar ist.

10. Vorrichtung nach einem der Ansprüche 1 bis 9, **dadurch gekennzeichnet, dass** die Unterdruckquelle (14) zur Erzeugung eines Unterdrucks (P) von 1 mbar bis 400 mbar, insbesondere kleiner 10 mbar ausgelegt ist.

11. Vorrichtung nach einem der Ansprüche 1 bis 10, **dadurch gekennzeichnet, dass** die Verbindungsleitung (13) eine Ventilanordnung (19) zum Schliessen der Verbindungsleitung (13) aufweist.

12. Vorrichtung nach einem der Ansprüche 1 bis 11, **dadurch gekennzeichnet, dass** die Haltevorrichtung einen Anschlag (26) zum Begrenzen der Eintauchtiefe der Säule (20) im Füllmaterial (T) aufweist.

13. Verfahren zum Befüllen einer an zwei Enden (21a, 21b) offenen Säule (20) mit einem Füllmaterial (T), insbesondere zum Befüllen einer Trennsäule für die Chromatographie mit einem Trennmedium (T),
bestehend aus den Schritten
- Einsetzen, insbesondere Eintauchen der Säule (2) in einen Behälter (11) mit Füllmaterial (T),
- Erzeugen eines Unterdrucks (P) im Innern (24) der Säule (20) zum Einsaugen des Füllmaterials (T) durch eine Befüllöffnung (22b) an einem Ende (21b) der Säule (20) in die Säule (20)
- Entfernen der gefüllten Säule (20) aus dem Behälter (11).

14. Verfahren nach Anspruch 13, **dadurch gekennzeichnet, dass** die Säule (20) mit der Befüllöffnung (22b) an ihrem unteren Ende (21b) in den Behälter (11) abgesenkt wird.

15. Verfahren nach einem der Ansprüche 13 oder 14, **dadurch gekennzeichnet, dass** die Befüllöffnung (22b) nach dem Befüllen mit dem Füllmaterial (T) verschlossen wird, insbesondere durch Einsetzen einer Fritte (23b) aus Füllmaterial.

16. Verfahren nach Anspruch 15, **dadurch gekennzeichnet, dass** die Säule (20) vor dem Verschliessen wenigstens im Bereich der Befüllöffnung (22b) gereinigt wird, dass insbesondere im Bereich der Befüllöffnung (22b) vorhandenes überschüssiges Trennmaterial (T) entfernt wird.

17. Verfahren nach einem der Ansprüche 13 bis 16, **dadurch gekennzeichnet, dass** vor dem Befüllen der Säule (20) die Säule in einer Ansaugöffnung (22a) am anderen Ende (21a) der Säule (20) mit einem luftdurchlässigen Verschlusselement (23a), insbesondere mit einer Fritte verschlossen wird.

18. Verfahren nach einem der Ansprüche 13 bis 17, **dadurch gekennzeichnet, dass** das Füllmaterial (T) im Behälter (11) vor oder während dem Befüllen der Säule (20) fluidisiert wird, insbesondere durch Einblasen eines Gases, insbesondere von Luft (L) in den Behälter (11).
